(19) Europäisches Patentamt

European Patent Office

Office européen des brevets

(11) Veröffentlichungsnummer: **0 225 611 B1**

(12) **EUROPÄISCHE PATENTSCHRIFT**

(45) Veröffentlichungstag der Patentschrift: **11.03.92**

(21) Anmeldenummer: **86116886.2**

(22) Anmeldetag: **04.12.86**

(51) Int. Cl.⁵: **C09D 133/08**, C08L 33/06

(54) **Wasserverdünnbare Beschichtungsstoffe, Verfahren zu deren Herstellung und deren Verwendung.**

(30) Priorität: **07.12.85 DE 3543359**

(43) Veröffentlichungstag der Anmeldung:
**16.06.87 Patentblatt 87/25**

(45) Bekanntmachung des Hinweises auf die
Patenterteilung:
**11.03.92 Patentblatt 92/11**

(84) Benannte Vertragsstaaten:
**AT DE FR GB NL**

(56) Entgegenhaltungen:
**US-A- 2 440 953**
**US-A- 2 837 444**
**US-A- 3 494 882**
**US-A- 3 775 360**

(73) Patentinhaber: **BASF Aktiengesellschaft**
**Carl-Bosch-Strasse 38**
**W-6700 Ludwigshafen(DE)**

(72) Erfinder: **Fischer, Gerhard**
**Am Hergottsacker 11**
**W-6716 Dirmstein(DE)**
Erfinder: **Neubert, Gerhard, Dr.**
**Panoramastrasse 11**
**W-6719 Battenberg(DE)**

**Beschreibung**

Die vorliegende Erfindung betrifft wasserverdünnbare, im wesentlichen emulgator-, schutzkolloid- und pigmentnetzmittelfreie, weniger als 15 Gew.-% organische Lösemittel enthaltende Beschichtungsstoffe auf der Basis von oxidativ trocknenden, fettsäuremodifizierten Kunstharzen und physikalisch trocknenden Polymerisatharzen, ein Verfahren zu deren Herstellung sowie deren Verwendung zum Schutz von Metallen und anderen Werkstoffen gegen äußere Einflüsse.

Für den Schutz von Metallen und anderen Werkstoffen gegen äußere Einflüsse haben sich Kombinationen von physikalisch aus organischer Lösung auftrocknenden Polymerisatharzen, wie z.B. Copolymerisate aus Vinylchlorid und Vinylisobutylether oder Chlorkautschuk mit oxidativ trocknenden Kunstharzen, wie z.B. mit Fettsäuren modifizierte Alkydharze, Epoxidharze, Urethanharze oder Acrylatharze seit langem bewährt. Solche Kombinationen weisen die technischen Vorteile beider Bindemittel-Komponenten auf. Beispielsweise trocknen sie an der Luft auch in dickeren Schichten relativ schnell durch Lösemittelverdunstung, und die anschließende oxidative Vernetzung sorgt für verbesserte mechanische Eigenschaften der Beschichtung wie z.B. erhöhte Wärmestandfestigkeit.

Aus wäßriger Phase auftrocknende entsprechende Bindemittelkombinationen konnten sich bisher wegen ihrer wesentlich geringeren Wasserfestigkeit ihrer Beschichtung und des damit verbundenen schlechteren Korrosionsschutzes nicht in gleichem Maße durchsetzen. Im allgemeinen werden zu diesem Zweck wäßrige Polymerisatdispersionen mit wasserlöslichen bzw. in organischen Lösemitteln gelösten und wasserverdünnbaren oder auch in Wasser emulgierten emulgatorhaltigen oxidativ trocknenden Kunstharzen kombiniert. Aus der US-A-3 494 882 sind z.B. wäßrige Bindemitteldispersionen bekannt, welche ein oxidativ trocknendes, fettsäuremodifiziertes Alkydharz, ein Pigment und ein Copolymerisat z.B. aus Vinylacetat und Ethylacrylat enthalten. Zur Dispergierung sowohl des Alkydharzes als auch des Pigments ist ein oberflächenaktives Schutzkolloid bzw. Pigmentnetzmittel notwendig. Solche Beschichtungen bleiben auforund ihres Gehaltes an Emulgatoren, Schutzkolloiden udn wasserlöslichen Hilfsstoffen wie Pigmentnetzmitteln und Verdikkern relativ wasserempfindlich.

In der EP 66 197 wird die Kombination bekannter wasserverdünnbarer niedermolekularer fettsäuremodifizierter Alkydharze mit bekannten hochmolekularen, nicht mit Wasser mischbaren fettsäuremodifizierten Alkydharzen als oxidativ bzw. lufttrocknende Überzugsmittel beschrieben. Sie ist frei von physikalisch trocknenden Polymerisatharzen. Die An- und Durchtrocknungsgeschwindigkeit derartiger Überzüge, insbesondere bei Anwendung in größerer Schichtdicke, ist daher für viele Zwecke unbefriedigend. Außerdem altern und verspröden derartige Überzüge an der Luft verhältnismäßig früh.

In der EP 0 133 949 wird eine Kombination bekannter wasserverdünnbarer Bindemittel mit emulgator- und schutzkolloidfreien organisch gelösten Polymerisatharzen beschrieben. Diese Beschichtungsstoffe haben jedoch dadurch Nachteile, daß zu ihrer Herstellung relativ große Mengen Lösemittel und relativ wasserempfindliche wasserlösliche Kunstharze eingesetzt werden müssen und zur Einarbeitung der Pigmente und Füllstoffe wasseraffine Netzmittel und Pigmentverteiler benötigt werden. Die Wasserfestigkeit und der Korrosionsschutz der damit hergestellten Beschichtungen sind daher für viele Zwecke nicht ausreichend, und der hohe Gehalt an organischen Lösemitteln verursacht Umweltprobleme.

Aufgabe der vorliegenden Erfindung war es, wasserverdünnbare Bindemittelkombinationen aus oxidativ trocknenden Kunstharzen und physikalisch trocknenden Polymerisatharzen aufzufinden, zu deren Herstellung und Pigmentierung keine hydrophilen Hilfsstoffe wie Emulgatoren, Schutzkolloide, Pigmentnetzmittel und keine wasserempfindlichen verfilmenden Bindemittelkomponenten eingesetzt werden müssen und auf die Mitverwendung organischer Lösemittel weitgehend verzichtet werden kann.

Gegenstand der vorliegenden Erfindung sind wasserverdünnbare, im wesentlichen emulgator-, schutzkolloid- und pigmentnetzmittelfreie, weniger als 15 Gew.-% organischer Lösemittel enthaltende Beschichtungsstoffe auf der Basis von oxidativ trocknenden, fettsäuremodifizierten Kunstharzen und physikalisch trocknenden Polymerisatharzen, enthaltend als Bindemittel eine in Wasser dispergierte Kombination aus

(a) 45 bis 2 Gew.-% mindestens eines wasserunlöslichen, oxidativ trocknenden fettsäuremodifizierten Alkydharzes, Urethanharzes oder Epoxidharzes mit einer Säurezahl von weniger als 20 mg KOH/g, einem Gehalt an einkondensierter Fettsäure von mindestens 50 Gew.-% und einer Viskosität von weniger als 100 Pa•s und

(b) 55 bis 98 Gew.-% mindestens eines durch Salzbildung mit Ammoniak, gegebenenfalls unter Zusatz von flüchtigen Alkoholen oder Glykolethern in Wasser dispergierbaren, physikalisch trocknenden Polymerisatharzes.

Bevorzugt sind Beschichtungsstoffe, die als Bindemittel eine in Wasser dispergierte Kombination aus 30 bis 5, insbesondere 25 bis B Gew.% der Komponente (a) und

70 bis 95, insbesondere 75 bis 92 Gew.% der Komponente (b) enthalten, sowie solche, deren Komponente (a) eine Säurezahl von weniger als 15, insbesondere weniger als 10 aufweist und mindestens 60 Gew.% Fettsäure einkondensiert enthält.

Außerdem ist Komponente (b) vorzugsweise ein (Meth)acrylsäureestercopolymerisat oder ein (Meth)-acrylsäureestercopolymerisatgemisch mit einem Styrolgehalt bis zu 30 Gew.% und einer Säurezahl zwischen 10 und 60, insbesondere zwischen 15 und 30 mg KOH/g Copolymerisat, bzw. ein Styrol/(Meth)-acrylsäureestercopolymerisat oder ein Styrol/(Meth)acrylsäureestercopolymerisatgemisch mit einem Gehalt an einpolymerisiertem Styrol zwischen 30 und 70 Gew.% und einer Säurezahl zwischen 25 und 90, vorzugsweise 25 bis 70, insbesondere zwischen 30 und 50 mg KOH/g Copolymerisat.

Die erfindungsgemäßen Beschichtungsstoffe können zusätzlich zur Kombination aus Komponente (a) und Komponente (b) 2 bis 50 Gew.%, bezogen auf die Kombination der Komponenten (a) und (b), mindestens eines mit Wasser nicht mischbaren, bei Raumtemperatur stabilen, wärmehärtbaren Lackharzes enthalten.

Gegenstand der vorliegenden Erfindung ist auch ein Verfahren zur Herstellung der Beschichtungsstoffe, wobei zunächst mindestens ein Pigment und/oder Füllstoff, gegebenenfalls unter Zusatz von organischen flüchtigen Lösemitteln und/oder Weichmachern sowie gegebenenfalls weiteren wasserunlöslichen Lackharzen in der Komponente (a) in üblicher Weise dispergiert wird und die erhaltene Pigment- und/oder Füllstoff-Suspension mit der wäßrigen Lösung bzw. Dispersion der Komponente (b) vermischt wird.

Außerdem ist die Verwendung dieser Beschichtungsstoffe für Schutzüberzüge auf Metallen und anderen Werkstoffen gegen Korrosion Gegenstand der Erfindung.

Der überraschende Vorteil der erfindungsgemäßen Beschichtungsstoffe ist durch die entscheidend verbesserte Wasserfestigkeit und den damit verbundenen besseren Korrosionsschutz im Vergleich zu herkömmlichen wäßrigen Beschichtungsstoffen gegeben. Die neuen Beschichtungsstoffe benötigen zu ihrer Herstellung kein oder nur relativ wenig Lösemittel. Auf die Mitverwendung wasseraffiner Hilfsstoffe, wie Pigmentnetz- und Dispergiermittel wird im wesentlichen verzichtet. Trotz Verwendung von emulgator- und schutzkollidfreien Bindemittelkomponenten lassen sich gut lagerbeständige stabile wäßrige Beschichtungsstoffe erhalten, die durch Verdunstung von Wasser und gegebenenfalls organischer Lösemittel auch in dicken Schichten physikalisch trocknen und bereits bei Raumtemperatur allmählich durch oxidative Vernetzung nachhärten. Die Härtung kann in bekannter Weise durch Wärme beschleunigt werden.

Zu den Aufbaukomponenten der erfindungsgemäßen Beschichtungsstoffe ist im einzelnen folgendes auszuführen:

(a) Als wasserunlösliche, fettsäuremodifizierte Alkydharze bzw. Urethanharze eignen sich solche, die durch flüchtige Salzbildner in Wasser nicht alleine emulgierbar bzw. dispergierbar sind, z.B. eignen sich handelsübliche durch Luftsauerstoff vernetzbare in organischen Lösemitteln lösliche oder gelöste, mit Fettsäuren halbtrocknender oder trocknender natürlicher Triglyceride modifizierte Alkydharze, Epoxidharze und Polyurethanharze. Diese Kunstharze enthalten keine oder so geringe Anteile an zur Salzbildung befähigten Carboxylgruppen, daß sie in Gegenwart von Ammoniak nicht mehr alleine in beliebig mit Wasser verdünnbare Lösungen bzw. Dispersionen überführt werden können. Ihre Säurezahl beträgt daher weniger als 20, vorzugsweise weniger als 15, insbesondere weniger als 10 mg KOH/g. Außerdem müssen diese Kunstharze (a) eine Viskosität gemessen mit einem Rotationsviskosimeter (Rheomat 15 T-FC, Meßbecher C Stufe 10; Hersteller Fa. Contraves AG, Zürich), von weniger als 100, vorzugsweise weniger als 30, insbesondere weniger als 10 Pa•s aufweisen. Ihr Gehalt an einkondensierten Fettsäuren beträgt mindestens 50, vorzugsweise mindestens 60, insbesondere mehr als 70 Gew.%.

Bevorzugt sind mit Fettsäuren trocknender oder halbtrocknender natürlicher Fettsäuren bzw. deren Triglyceriden modifizierte handelsübliche Alkydharze. Beispiele für derartige Fettsäuren bzw. Fettsäuregemische sind Leinöl-, Sojaöl-, Tallöl-, Safflorölfettsäuren.

(b) Als Komponenten (b) eignen sich an sich bekannte physikalisch trocknende zur Salzbildung befähigende Gruppen enthaltende Polymerisatharze bzw. Polymerisatharzgemische, die mit Hilfe von Ammoniak und gegebenenfalls Colösemitteln (=flüchtigen Alkoholen oder Glykolethern) in wäßrige Dispersionen bzw. Lösungen überführbar sind. Bevorzugt sind solche Dispersionen, die frei von stabilisierenden wasseraffinen Emulgatoren und Schutzkolloiden sind. Als Lösemittel eignen sich dabei beispielsweise flüchtige Glykolether, wie z.B. Butylglykol, Propoxy- und Butoxypropanole, oder flüchtige Alkohole, wie z. B. n-Propanol und sec. Butanol.

Vorzugsweise werden als Komponente (b) (Meth)acrylsäureester-Copolymerisate mit einem Styrolgehalt von bis zu 30 Gew. % und einer Säurezahl in mg KOH/g Copolymerisat zwischen 10 und 60, vorzugsweise zwischen 15 und 30, oder Styrol/ (Meth)acrylsäureester-Copolymerisate mit einem Styrolgehalt zwischen 30 und 70 Gew. % und einer Säurezahl zwischen 25 und 90, vorzugsweise zwischen 25 und 70, insbesondere zwischen 30 und 50 verwendet.

3

Besonders geeignete Copolymerisat-Dispersionen bzw. Lösungen sind z.B. in DE-OS 30 22 824, DE-OS 30 22 870 und DE-OS 32 12 238 beschrieben.

Das Mengenverhältnis der Komponenten (a) zu (b) beträgt 45 : 55 bis 2 : 98, vorzugsweise 30 : 70 bis 5 : 95, insbesondere 25 : 75 bis 8 : 92.

Pigmente und Füllstoffe, wie Titandioxid, Talkum und Schwerspat können in bekannter Weise in der wäßrigen, gegebenenfalls lösemittelhaltigen Lösung bzw. Dispersion der Komponente (b) nach Zusatz von Ammoniak dispergiert werden. Zusätzliche Pigmentdispergierhilfsmittel sind dabei im allgemeinen nicht erforderlich. Die Komponente (a) wird dann anschließend durch Verrühren in die gegebenenfalls pigmentierte Dispersion der Komponente (b) einemulgiert. Für diesen Schritt sind keine Emulgatoren erforderlich.

Besonders vorteilhaft ist es jedoch, erfindungsgemäß zunächst die Pigmente und Füllstoffe in der Komponente (a), gegebenenfalls unter Zusatz von organischen flüchtigen Lösemitteln und/oder Weichmachern für die Komponente (a) und (b), in bekannter Weise zu dispergieren und die erhaltene Suspension dann mit der wäßrigen Lösung bzw. Dispersion der Komponente (b) zu vermischen.

Als organische Lösemittel können bevorzugt die oben angeführten Produkte, aber auch andere flüchtige die Komponente (a) und gegebenenfalls (b) lösende Lösemittel, wie z.B. Aromaten oder Testbenzin eingesetzt werden. Geeignete Weichmacher sind beispielsweise handelsübliche Weichmachungsmittel für Polymerisatharze, wie z.B. Chlorparaffine oder Phthalatester.

Der Vorteil dieses Verfahrens besteht darin, daß die Pigmente und Füllstoffe besonders schnell, vollständig und hydrophob benetzt werden, ohne daß hierfür hydrophilmachende Hilfsstoffe eingesetzt werden müssen. Die Wasserfestigkeit und der Korrosionsschutz der getrockneten Beschichtungen wird auf diese Weise noch weiter verbessert. Trotz Verzicht auf die sonst erforderlichen hydrophilen Hilfsstoffe ist die Stabilität der so hergestellten Beschichtungsstoffe nicht beeinträchtigt.

Zusätzlich können mit Wasser nicht mischbare bei Raumtemperatur stabile wärmehärtbare bekannte Lackharze in Mengen von bis zu etwa 50 Gew.%, vorzugsweise etwa 5 bis 30 Gew.%, bezogen auf die Kombination der Komponenten (a) + (b), mitverwendet werden. Solche Lackharze sind beispielsweise mit Butanolen veretherte Melamin-, Harnstoff- oder Phenolformaldehydharze. Der Zusatz derartiger Harze ist von Vorteil, wenn die Beschichtungen bei Temperaturen über 75°C getrocknet werden sollen. Des weiteren können in gleichen Mengenanteilen mit Komponente (a) homogen mischbare bzw. in (a) homogen lösliche handelsübliche Hartharze, wie z.B. Keton-, Aldehyd- oder Cumaronharze der Komponente (a) zugesetzt werden. Besonders bevorzugte Hartharze sind Kondensationsprodukte aus Harnstoff und aliphatischen Aldehyden. Sie vermögen, die Verträglichkeit und den Glanz der erfindungsgemäßen Bindemittel-Kombinationen in besonderem Maße zu fördern.

Außer den genannten Komponenten können den Beschichtungsstoffen weitere übliche Lackrohstoffe und Lackhilfsstoffe zugesetzt werden - wie z.B. Entschäumer, Verdicker, Antiabsetzmittel, Hautverhütungsmittel und Sikkative. Letztere werden im allgemeinen zur Beschleunigung der Härtungsreaktion mitverwendet.

Die Einarbeitung solcher Stoffe kann beispielsweise gemeinsam mit dem Pigment bzw. durch Vermischen mit der fertigen Pigmentanreibung erfolgen. Die erfindungsgemäßen Beschichtungsstoffe eignen sich besonders für den Schutz von Metallen und anderen Werkstoffen gegen Korrosion.

Die folgenden Beispiele sollen den Gegenstand der vorliegenden Erfindungen näher erläutert, ohne diesen einzuschränken.

Die in den Beispielen angegebenen Teile und Prozente sind, wenn nicht anders angegeben, Gewichtsteile bzw. Gewichtsprozente.

Herstellung der Dispersionen der Copolymerisate:

Abkürzungen:

| | |
|---|---|
| MMA = | Methylmethacrylat |
| BA = | Butylacrylat |
| i-BA = | Isobutylacrylat |
| St = | Styrol |
| ITS = | Itaconsäure |
| AS = | Acrylsäure BG = Butylglykol |
| NH$_3$ konz. = | Konzentrierter Ammoniak (25%ige wäßrige Lösung) |
| t-BPB = | t-Butylperbenzoat |
| SZ = | Säurezahl in mg KOH/g Polymerisat |
| K-Wert = | K-Wert nach DIN 53726, 3%ig in Aceton |

Die in der Tabelle aufgeführten Monomermischungen werden nach bekannten Verfahren in 30 Gew.%

BG bezogen auf Monomergemisch mit Hilfe von 1,2 Teilen t-BPB bei ca. 130°C polymerisiert. Die Polymerisatlösungen werden anschließend mit der angegebenen weiteren Menge BG verdünnt und mit Wasser und $NH_3$ konz. auf die in der Tabelle angegebenen Konzentrationen und pH-Werte zu Dispersionen (D) bzw. Losungen (L) verrührt.

Tabelle

| Nr.* | Zusammensetzung des Monomergemisches | SZ** | K-Wert | BG Zusatz (%) | Konzentration | |
|---|---|---|---|---|---|---|
| | | | | | % | pH-Wert |
| 1 | 21,5 St 14 MMA 59 iBA 5,5 As | 43 | 28 | 10 | 30 | 9,5-10 L |
| 2 | 38 St 52 nBA 10 As | 78 | 26 | 0 | 25 | 9,5-10 L |
| 3 | 46 St 50 nBA 4 As | 31 | 33 | 0 | 35 | 8,5 D |
| 4 | 56 MMA 42 iBA 2 ITS | 14 | 28 | 0 | 35 | 8,5 D |
| 5 | 25 St 20 MMA 51,5 iBA 3,5 As | 27 | 31 | 0 | 35 | 8,5 D |

\* Copolymerisatlösung bzw. Copolymerisatdispersion
\*\* SZ = mg KOH/g Polymerisat

Herstellung der Beschichtungsstoffe

Beispiel 1

67 g der Copolymerisatlösung 1 wurden mit Wasser auf eine Viskosität von ca. 5 Pa•s eingestellt. Darin wurden 50 g Rutil ca. 20 Minuten dispergiert. Die erhaltene Suspension wurde mit 20 g eines mit 0,8 g eines handelsüblichen Hautverhütungsmittels auf der Basis von Methylethylketoxim und 0,4 g eines Sikkativs auf der Basis von Cobalt, Blei und Mangan versetzten handelsüblichen Alkydharzes auf der Basis von 14 Gew.% Isophthalsäure und 83 Gew.% Leinöl und Tallölfettsäure mit einer SZ unter 10 und einer Viskosität von ca. 3 Pa•s (z.B. Worléekyd T1) intensiv verrührt.

Anschließend wurde die Farbe mit 171 g der Copolymerisatdispersion 5 vermischt. Die SZ des eingesetzten Polymerisatgemisches betrug 31. Man erhielt eine stabile Dispersionsfarbe, die mit hohem Glanz auf Metallen auftrocknet. Härte, Kratzfestigkeit und Lösemittelbeständigkeit der BeSchichtung nehmen im Laufe der Zeit oder beschleunigt durch Nachtrocknung bei erhöhter Temperatur zu. Die Beschichtungen zeichneten sich durch hohe Wasserquellfestigkeit sowie guten Korrosionsschutz für Metalle aus.

Beispiel 2

In 25 g des oben genannten mit 0,8 g Hautverhütungsmittel versetzten Alkydharzes wurden 50 g Rutil dispergiert. Die Pigmentpaste wurde mit 0,4 g Sikkativ und anschließend mit 83 g der Copolymerisatlösung 1 sowie 143 g der Polymerisatdispersion 5 vermischt und mit Wasser auf eine Viskosität von ca. 3 Pa•s eingestellt. Die Farbe zeichnete sich durch ähnliche Eigenschaften wie die des Beispiels 6, aber noch bessere Ergebnisse bei Korrosionsschutzprüfungen aus.

Beispiel 3

In 25 g eines mit 0,8 g Hautverdünnungsmittel versetzten handelsüblichen Alkydharzes auf der Basis von ca. 23 Gew.% Phthalsäureanhydrid und 64 Gew.% halbtrocknenden Fettsäuren mit einer SZ unter 10 und einer Viskosität von ca. 7 Pa •s (z.B. Worléekyd 151/3) wurden 50 g Rutil dispergiert. Nach Zusatz von 0,4 g Sikkativ wurde die Pigmentpaste intensiv mit 100 g der Copolymerisatlösung 2 und 143 g der Dispersion 3 vermischt. Die Säurezahl des eingesetzten Polymerisatgemisches betrug 46.5. Man erhielt eine Glanzfarbe mit Eigenschaften vergleichbar zu Beispiel 2.

Beispiel 4

Es wurde wie in Beispiel 3 verfahren, jedoch zum Anreiben des Pigments anstelle von 25 g des Alkydharzes eine Mischung von 20 g des gleichen Alkydharzes und 10 g einer 60gew.%igen mit butanolveretherten handelsüblichen Melamin-Formaldehyd-Lösung eingesetzt. Die so erhaltene Glanzfarbe ließ sich bei Temperaturen oberhalb etwa 80°C zusätzlich aushärten.

Beispiel 5

76 g der sikkativierten Pigmentpaste des Beispiels 2 wurden mit 83 g der Copolymerisatlösung 1 und 143 g der Copolymerisatdispersion 4 intensiv verrührt.

Die SZ des eingesetzten Copolymerisatgemisches betrug 23,5. Die Eigenschaften der daraus hergestellten Beschichtungen waren ähnlich denen des Beispiels 2.

Beispiel 6

Es wurde wie in Beispiel 4 verfahren, jedoch zum Anreiben der Pigmente 20 g des gleichen Alkydharzes und 10 g eines Hartharzes auf der Basis von Harnstoff und einem aliphatischen Aldehyd, im Handel unter der Bezeichnung Laropal® A 81 erhältlich, eingesetzt. Laropal A 81 wurde hierzu vorher in 5 Teilen n-Propanol gelöst.

Die Anstriche dieser Farbe zeichneten sich gegenüber denen des Beispiels 3 durch noch besseren Glanz aus.

**Patentansprüche**

1. Wasserverdünnbare, im wesentlichen emulgator-, schutzkolloid- und pigmentnetzmittelfreie, weniger als 15 Gew.-% organischer Lösemittel enthaltende Beschichtungsstoffe auf der Basis von oxidativ trocknenden, fettsäuremodifizierten Kunstharzen und physikalisch trocknenden Polymerisatharzen, enthaltend als Bindemittel eine in Wasser dispergierte Kombination aus

(a) 45 bis 2 Gew.-% mindestens eines wasserunlöslichen, oxidativ trocknenden fettsäuremodifizierten Alkydharzes, Urethanharzes oder Epoxidharzes mit einer Säurezahl von weniger als 20 mg KOH/g, einem Gehalt an einkondensierter Fettsäure von mindestens 50 Gew.-% und einer Viskosität von weniger als 100 Pa·s und

(b) 55 bis 98 Gew.-% mindestens eines durch Salzbildung mit Ammoniak, gegebenenfalls unter Zusatz von flüchtigen Alkoholen oder Glykolethern in Wasser dispergierbaren, physikalisch trocknenden Polymerisatharzes.

2. Beschichtungsstoffe nach Anspruch 1, enthaltend als Bindemittel eine in Wasser dispergierte Kombination aus

30 bis 5 Gew.% der Komponente (a) und
70 bis 95 Gew.% der Komponente (b).

3. Beschichtungsstoffe nach Anspruch 1 oder 2, in denen die Komponente (a) eine Säurezahl von weniger als 15 aufweist und mindestens 60 Gew.% Fettsäure einkondensiert enthält.

4. Beschichtungsstoffe nach den Ansprüchen 1 bis 3, in denen die Komponente (b) ein (Meth)-acrylsäureestercopolymerisat oder ein (Meth)acrylsäureestercopolymerisatgemisch mit einem Styrolgehalt bis zu 30 Gew.% und einer Säurezahl zwischen 10 und 60 mg KOH/g Copolymerisat ist.

5. Beschichtungsstoffe nach den Ansprüchen 1 bis 3, in denen die Komponente (b) ein Styrol/(Meth)-acrylsäureestercopolymerisat oder ein Styrol/(Meth)acrylsäureestercopolymerisatgemisch mit einem Gehalt an einpolymerisiertem Styrol zwischen 30 und 70 Gew.% und einer Säurezahl zwischen 25 und 90 mg KOH/g Copolymerisat ist.

6. Beschichtungsstoffe nach den Ansprüchen 1 bis 5, die zusätzlich zur Kombination aus Komponente (a) und Komponente (b) 2 bis 50 Gew.%, bezogen auf die Kombination der Komponenten (a) und (b), mindestens eines mit Wasser nicht mischbaren, bei Raumtemperatur stabilen, wärmehärtbaren Lackharzes enthalten.

7. Verfahren zur Herstellung der Beschichtungsstoffe nach den Ansprüchen 1 bis 6, dadurch gekennzeichnet, daß zunächst mindestens ein Pigment und/oder Füllstoff, gegebenenfalls unter Zusatz von organischen flüchtigen Lösemitteln und/oder Weichmachern sowie gegebenenfalls weiterer wasserunlöslichen Lackharzen, in der Komponente (a) in üblicher Weise dispergiert wird und die erhaltene Pigmentund/oder Füllstoff-Suspension mit der wäßrigen Lösung bzw. Dispersion der Komponente (b) vermischt wird.

8. Verwendung der Beschichtungsstoffe nach den Ansprüchen 1 bis 6 für Schutzüberzüge auf Metallen und anderen Werkstoffen.

**Claims**

1. A water-dilutable coating composition which is based on oxidatively drying, fatty acid-modified synthetic resins and physically drying polymer resins, is essentially free from emulsifiers, protective colloids and pigment wetting agents and contains less than 15 % by weight of organic solvent and contains, as binder, a water-dispersed combination of
   (a) from 45 to 2 % by weight of at least one water-insoluble, oxidatively drying, fatty acid-modified alkyd resin, urethane resin or epoxy resin having an acid number of less than 20 mg of KOH/g, containing at least 50 % by weight of condensed fatty acid and having a viscosity of less than 100 Pa.s, and
   (b) from 55 to 98 % by weight of at least one physically drying polymer resin which can be dispersed in water through salt formation with ammonia, with or without addition of volatile alcohols or glycol ethers.

2. A coating composition as claimed in claim 1, containing, as binder, a water-dispersed combination of from 30 to 5 % by weight of component (a) and
   from 70 to 95 % by weight of component (b).

3. A coating composition as claimed in claim 1 or 2, in which component (a) has an acid number of less than 15 and contains at least 60 % by weight of condensed fatty acid.

4. A coating composition as claimed in claim 1 or 2 or 3, in which component (b) is a (meth)acrylate copolymer or a (meth)acrylate copolymer mixture containing up to 30 % by weight of styrene and having an acid number from 10 to 60 mg KOH/g of copolymer.

5. A coating composition as claimed in claim 1 or 2 or 3, in which component (b) is a styrene-(meth)-acrylate copolymer or a styrene(meth)acrylate copolymer mixture containing from 30 to 70 % by weight of copolymerized styrene and having an acid number of from 25 to 90 mg KOH/g of copolymer.

6. A coating composition as claimed in claim 1 or 2 or 3 or 4 or 5, which, in addition to the combination of component (a) and component (b), contains from 2 to 50 % by weight, based on the combination of components (a) and (b), of at least one water-immiscible, thermocurable surface coating resin which is stable at room temperature.

7. A process for the preparation of a coating composition as claimed in claim 1 or 2 or 3 or 4 or 5 or 6, which comprises first dispersing at least one pigment and/or filler, with or without addition of a volatile organic solvent and/or plasticizer and with or without further water-insoluble surface coating resins, in component (a) in a conventional manner and mixing the resultant pigment and/or filler suspension with an aqueous solution or dispersion of component (b).

8. The use of a coating composition as claimed in claim 1 or 2 or 3 or 4 or 5 or 6 for protective coatings on metals and other materials.

**Revendications**

1. Matières de revêtement diluables à l'eau, pratiquement dépourvues d'émulsionnant, de colloïde protecteur et d'agent de dispersion des pigments et contenant moins de 15% en poids de solvant organique, à base de résines synthétiques modifiées par des acides gras, séchant par oxydation et de résines de polymères séchant par voie physique, contenant, en tant que liant, une combinaison dispersée dans de l'eau de
   (a) 45 à 2% en poids d'au moins une résine alkyde, une résine uréthane ou une résine époxy insoluble dans l'eau, séchant par oxydation, modifiée par des acides gras, ayant un indice d'acide de moins de 20 mg de KOH/g, une teneur en acide gras inclus par condensation d'au moins 50% en poids et une viscosité de moins de 100 Pa.s, et

(b) 55 à 98% en poids d'au moins une résine de polymère séchant par voie physique, dispersible dans l'eau par formation de sel avec de l'ammoniac, éventuellement avec addition d'alcools ou d'éthers de glycol volatils.

2. Matières de revêtement selon la revendication 1, contenant, en tant que liant, une combinaison dispersée dans de l'eau de

30 à 5% en poids du composent (a) et

70 à 95% en poids du composant (b).

3. Matières de revêtement selon la revendication 1 ou 2, dans lesquelles le composant (a) présente un indice d'acide de moins de 15 et contient au moins 60% en poids d'acide gras inclus par condensation.

4. Matières de revêtement selon l'une quelconque des revendications 1 à 3, dans lesquelles le composant (b) est un copolymère d'esters d'acide (méth)acrylique ou un mélange de copolymères d'esters d'acide (méth)acrylique ayant une teneur en styrène qui peut aller jusqu'à 30% en poids et un indice d'acide compris entre 10 et 60 mg de KOH/g de copolymère.

5. Matières de revêtement selon l'une quelconque des revendications 1 à 3, dans lesquelles le composant (b) est un copolymère styrène/ester d'acide (méth)acrylique ou un mélange de copolymères styrène/ester d'acide (méth)acrylique ayant une teneur en styrène en liaison polymère comprise entre 30 et 70% en poids et un indice d'acide compris entre 25 et 90 mg de KOH/g de copolymère.

6. Matières de revêtement selon l'une quelconque des revendications 1 à 5, qui contiennent, en plus de la combinaison de composant (a) et de composant (b), de 2 à 50% en poids, par rapport à la combinaison des composants (a) et (b), d'au moins une laque thermodurcissable, stable à la température ambiante et non miscible à l'eau.

7. Procédé de préparation des matières de revêtement selon l'une quelconque des revendications 1 à 6, caractérisé en ce qu'on commence par mettre en dispersion de la manière habituelle, dans le composant (a), au moins un pigment et/ou une charge, éventuellement avec addition de solvants organiques volatils et/ou de plastifiants, ainsi, le cas échéant, que d'autres laques insolubles dans l'eau, puis on mélange la suspension de pigment et/ou de charge obtenue à la solution ou dispersion aqueuse du composant (b).

8. Utilisation des matières de revêtement selon l'une quelconque des revendications 1 à 6 pour des enduits protecteurs sur des métaux et d'autres matériaux.